Europäisches Patentamt

European Patent Office

Office européen des brevets

(11) Publication number: **0 060 011**
**B1**

(12) **EUROPEAN PATENT SPECIFICATION**

(45) Date of publication of patent specification: **12.09.84**

(21) Application number: **82200306.7**

(22) Date of filing: **09.03.82**

(51) Int. Cl.³: **F 24 D 3/00**

(54) **A tap water and central heating control unit.**

(30) Priority: **10.03.81 NL 8101151**

(43) Date of publication of application:
**15.09.82 Bulletin 82/37**

(45) Publication of the grant of the patent:
**12.09.84 Bulletin 84/37**

(84) Designated Contracting States:
**AT BE CH DE FR GB IT LI NL SE**

(56) References cited:
**DE-A-1 404 863**
**DE-A-2 105 889**

(73) Proprietor: **Woningbouwvereniging "TALMA"**
**De Singel 5 P.O. Box 125**
**NL-9200 AC Drachten (NL)**

(72) Inventor: **Westerhof, Auke**
**Claerkamp 26**
**NL-9202 CN Drachten (NL)**

(74) Representative: **van der Beek, George Frans**
**et al**
**Nederlandsch Octrooibureau Johan de Wittlaan**
**15 P.O. Box 29720**
**NL-2502 LS Den Haag (NL)**

Courier Press, Leamington Spa, England.

# Description

The invention relates to a tap water and central heating control unit for use in a central block or district system for hot water supply, whereby the heated water from a central heat source is supplied via a ring conduit to a plurality of remotely situated tap water and central heating control units. Such a control unit is provided with a heat exchanger having a tap water spiral, two three-way valves in a conduit system to be connected to the space heating and having an inlet conduit and an outlet conduit for the heated water from the ring conduit, a circulation pump, a tap water thermostat and a central heating thermostat, electric wiring and associated power supply. Such a control unit is known in practice.

These known control units in connection with the high water temperatures and pressures, to be processed in this case, are relatively heavily implemented having among others larger valves and a large circulation pump.

The object of the invention is to provide a tap water and central heating control unit having such an implementation and connection of the valves and circulation pump, that an extremely simple, compact and noise-free unit is obtained which has high efficiency and low pressure fluctuations. In accordance with the invention this object is attained in a control unit of the type, mentioned in the preamble, such that the one three-way valve is taken up directly in the inlet conduit of the hot water, which one valve divides said inlet conduit in a by-pass conduit leading to the outlet or return conduit and a further conduit, contaning the circulation pump, leading to the other three-way valve, which other valve divides said further conduit in a conduit leading to the heat exchanger and a conduit leading to the space heating.

Such a tap water and central heating control unit can be used to advantage in a central system for hot water supply, in which system lower water temperatures, such as 60—90°C, and lower pressures, such as 1—3 atm, are present. Also maintenance for such a control unit according to the invention can easily be performed due to the well organized arrangement and the simple integrated electric system. Convectors having a one-piping system or a two-piping system can be used to advantage for the means of the space heating. Said convectors quickly heat up as a result of their small water content which also leads to a further economization of energy. These convectors also require less material and space in the houses or spaces to be heated. Instead of taking up said convectors or radiators directly in the conduit system for the space heating one can implement a further heat exchanger in said conduit system. The heated water from the ring conduit passes through the primary piping of said further heat exchanger and hot air from the secondary piping of said further heat exchanger is supplied to a further channel system for the space heating.

A further embodiment of the tap water and central heating control unit, in which the heat supply to the tap water heat exchanger has priority of that to the space heating is characterized in, that the one and the other three-way valve are open in rest position respectively to the by-pass conduit and to the conduit leading to the tap water heat exchanger, and that a rest contact of the tap water thermostat is connected to one contact of the central heating thermostat, the other contact of which is connected in series to an excitation means of the other three-way valve, which other three-way valve has an end contact taken up in series with an excitation means of the one three-way valve.

The one three-way valve can be provided to advantage with an end contact, which is connected in series to an excitation means of the circulation pump. This circulation pump, therefore, will only rotate when hot water is required, which is made possible by the small water capacity of the convectors used as space heating means.

The said end contact of the other three-way valve also can be used to advantage for the excitation of a relay, through which a unit meter for measuring the momentaneous consumption, both with respect to space heating as to tap water use, can be switched in.

The invention will be explained on the basis of an exemplary embodiment with reference to the drawings, in which:

Figure 1 shows a schematic view of a possible arrangement of the control units in a central block or district system for hot water supply;

Figure 2 shows a diagram of the arrangement of the tap water and central heating control unit according to the invention; and

Figure 3 shows an electric diagram associated with the control unit indicated in figure 2.

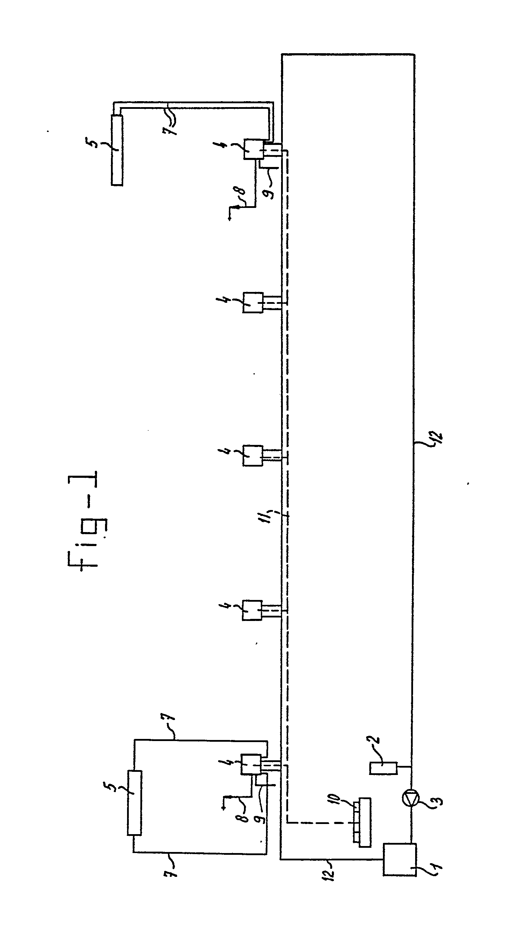

In the central block or district system for heat supply, indicated in figure 1, hot water is supplied from the central heat source 1 via the double ring conduit 12 to a plurality of tap water and central heating control units 4 positioned in various houses or buildings, and is drawn therefrom. The two conduits of said ring conduit do not require to be reduced in diameter upon connection to a control unit. A circulation pump 3 is taken up in the ring conduit in the usual way and furthermore an expansion vessel 2 is provided. The consumption of each separate house or building provided with such a control unit can be indicated via a multi-wire electric cable 11 on a central, stamped and verified unit meter 10. A convector 5 of the one-piping system type, indicated at the left side of the drawing as an example, is connected via a conduit 7 to the control unit 4. The hot water tap conduit and the cold water supply to the tap spiral in the unit 4 are respectively indicated by references 8 and 9. A convector of the two-piping system type, indicated at the right side of the drawing by reference 15, is also connected via a conduit 7 to control unit 4. The inlet or supply and the outlet or drain of the control unit are respectively connected to the supply ring conduit and to the return or drain ring conduit, through which the temperature reduction of the hot water in the ring conduit, caused by each control unit with respect to the succeeding series-connected further control units, is minimal.

The central heat source 1 can be a boiler apparatus or can be a large heat exchanger, to the primary side of which a conduit of a larger system, such as a city heating network, and to the secondary side of which the ring conduit of the present block or district system is connected.

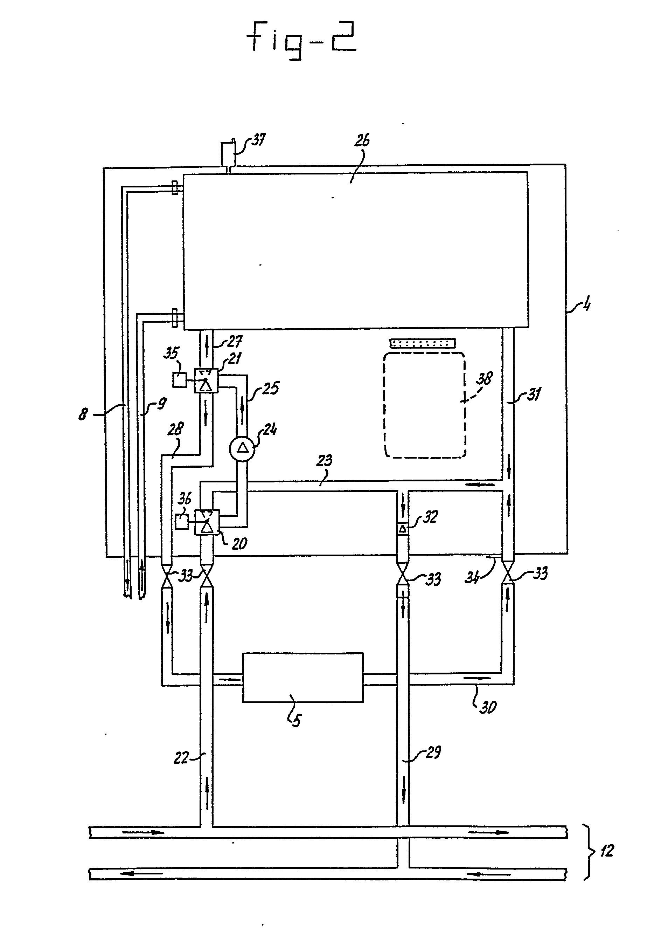

Figure 2 gives a schematic view of the arrangement of the components in the control unit. The inlet or supply conduit and the outlet or return conduit, both connected to the ring conduit 12, are respectively indicated by references 22 and 29. A three-way valve 20 is taken up in the inlet conduit 22, which valve 20 divides the inlet conduit in a by-pass conduit 23 and a further conduit 25 comprises the circulation pump 24. This further conduit 25 is connected to the other three-way valve 21, which divides said conduit in a conduit 27 leading to the heat exchanger 26 and a conduit 28 leading to the space heating 5. The heat exchanger 26 comprises a tap spiral which, upon supply of sufficient heat, heats up the cold water supplied via the conduit 9 for a further release via the conduit 8. The space heating 5 can comprise a plurality of means, such as convectors of the one- or two-piping system, which are connected directly to the conduit 28. The space heating 5 can also consist of a heat exchanger and a hot air channel system connected to the secondary side of said heat exchanger. A conduit 30 returns from the space heating 5 to the return conduit 29, in which a water lock 32 is taken up. The by-pass conduit 23 and the return conduit 31 from the heat exchangers 26 are also connected to said conduit 29.

An adjustable cock is indicated by reference 33 and a tap cock is indicated by reference 34. An automatic air releave opening is mounted when required and is indicated by reference 37.

A transformer of 220 Volt/24 Volt is indicated at 38 for the usual power supply of the thermostats and of the excitation motors 35, 36 of the three-way valves.

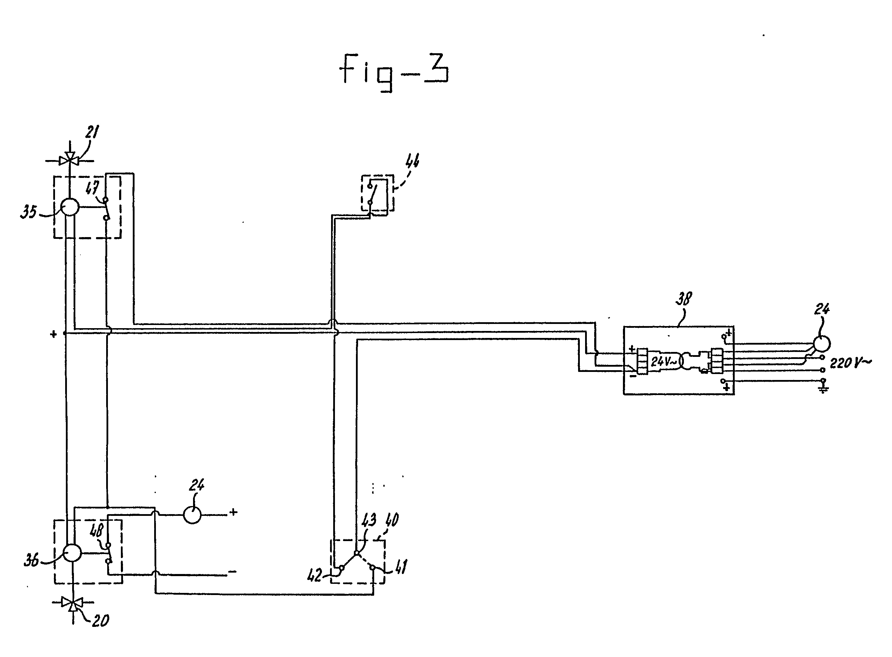

Figure 3 shows the electric diagram of the control unit. A (+) supply line is connected from the transformer 38 to the motor 35 of the three-way valve 21 and to the motor 36 of the three-way valve 20. The negative side of the transformer is connected on the one side via an end contact 47 of the motor 35 to the negative pole of the motor 36 of the three-way valve 20, and is connected on the other side to another line via the contacts 43 and 42 in rest position of the tap thermostat 40 and via both contacts of the room thermostat 44 to the negative pole of the motor 35. The motor 36 is also provided with an end contact 48 which is taken up in series with the power supply line of the circulation pump 24. This power supply line is connected to the primary side of the transformer 38.

The operation of the control unit will be explained on the basis of figures 2 and 3. As is usual, the heat supply to the heat exchanger has priority of the heat supply to the space heating, which comprises a plurality of convectors or radiators or a further heat exchanger combined with a hot-air channel system at its secondary side. Due to this priority the three-way valve 21 is open in rest position to the conduit 27 leading to the heat exchanger 26, and the three-way valve 20 is open in rest position to the by-pass conduit 23 leading to the return conduit 29.

When hot tap water from the tap spiral is drained via the conduit 8 and subsequently heat has to be supplied to the heat exchanger 26, the tap water thermostat 40 taken up in the cold water inlet of the tap spiral is enabled, through which its fixed contact 43 is connected to the operating contact 41 such that the power supply circuit of the motor 36 is closed. The three-way valve 20 then will switch from the position leading to the by-pass conduit to the position leading to the conduit 25. When this three-way valve during this action is nearly in its final position, the end contact 48 closes through which the power supply circuit of the circulation pump 24 is closed. This pump then will start to rotate. The hot water then is supplied from the ring conduit via the three-way valve 21 to the heat exchanger 26 and will be drained from said heat exchanger via the conduits 31 and 29 to the ring conduit. Upon closing the hot water cock, said heat will yet be supplied for some time such that a small heat supply is stored. The advantage in this operation is also that during tapping only a temperature difference of $\pm 2°C$ comes about. When the desired temperature is attained, the thermostat 40 will interrupt its contact through which the power supply of the motor 36 is removed. The three-way valve 20 turns back and the end contact 48 opens. Due to this, the circulation pump will stop.

Assuming the control unit has a capacity of 30,000 Kcal/hour, for example a quantity of water of 5 l/min. of about 60°C can be tapped on the basis of a temperature of the water in the ring conduit of 70—90°C.

When the room thermostat 44 is actioned in the spaces heated by the space heating 5, the associated contact of said thermostat will be closed. When the tap water thermostat is now in rest position through which the rest contact 42 and the fixed contact 43 are connected to each other, the motor 35 will be excited via the contacts of the room thermostat. The three-way valve 21 will move to the other position through which the supply conduit 28 of the space heating 5 is connected to the conduit 25. When the three-way valve 21 is completely moved into said position, the associated end contact 47 is closed through which the motor 36 is also excited. Due to this, the three-way valve 20 will switch from the position to the by-pass conduit 23 now to the circulation pump 24. When this three-way valve 20 is nearly in said position, the associated end contact 48 will close such that the circulation pump 24 starts to rotate. Heat will now be supplied to the space heating 5. When the space to be heated is at the required temperature, the power supply line is interrupted by the room thermostat 44 through which both valves rerotate and the circulation pump stops.

A relay 24 Volt/220 Volt can be connected to the circuit of the end contact 47 such that a meter, verified in units for measuring the consumption, can be switched in for each separate house or building.

A boiler apparatus having a small water content can be used in the above mentioned central system, for which boiler apparatus hot water having a temperature between 70—90°C is obtained. Owing to this the system can be used to advantage for offices, centres for aged persons, block heating, flats, etc. The ring conduit has everywhere the same diameter also at the separate tap water and central heating control units. The capacity of each separate control unit may be 30,000 Kcal/hour.

A convector having a non-piping system can be used to advantage in case the unit capacity is below 13.000 Kcal/hour and a convector having a two-piping system can be used to advantage in case the unit capacity is above 13.000 Kcal/hour. These convectors have a small water content owing to which they are able to react fast to the supplied heat of for example 80°C.

The above described tap water and central heating control unit according to the invention has, as indicated before, a very compact implementation having the following dimensions of a depth of about 35 cm, a width of about 50 cm and a height of about 80 cm. Such an unit therefore can be installed without taking much space quite easily somewhere in an occupied room or space.

The above explained system for hot water supply is only filled with conduit water without any addition of rust preventing substances. The pressure at the tap water side (i.e. the tap water to be heated) depends on the locally existing pressure of the conduit water, owing to which the prescribed protection for inlet combinations of eight atmospheres is maintained. The pressure of the hot water, however, in the ring conduit and in the associated central heating conduits is 1,5—3 atmospheres, owing to which the protection against a too high pressure is adjusted to three atmospheres.

The water in the system in day time will have for example a temperature of 70—90°C, whereby tap water having a temperature of about 60°C can be obtained. The water in the system at night will have a temperature of about 60—80°C, whereby tap water having a temperature of about 40°C can be tapped.

The control unit can also be applied in a city heating network when at least the temperatures and pressures, in contradiction to the usual high values thereof, are equal to the above already mentioned values. The single-wall tap water spiral in the heat exchanger 26 has then to be replaced by a double-wall spiral in connection with the strange substances which indeed may be present in the water of a city heating network.

## Claims

1. A tap water and central heating control unit (4) for use in a central block or district system for hot water supply, whereby the heated water from a central heat source (1) is supplied via a ring conduit (12) to a plurality of remotely situated tap water and central heating control units (4), each control unit being provided with a heat exchanger (26) having a tap water spiral, two three-way valves (20, 27) in a conduit system to be connected to the space heating (5) and having an inlet conduit (22) and an outlet conduit (29) for the heated water from the ring conduit (12), a circulation pump (24), a tap water thermostat (40) and a central heating thermostat (44), electric wiring and associated power supply, characterized in that the one three-way valve (20) is taken up directly in the inlet conduit (22) of the hote water and divides said inlet conduit in a by-pass conduit (23) leading to the outlet conduit (29) and a further conduit (25), containing the circulation pump (24), leading to the other three-way valve (21), which other valve divides said further conduit in a conduit (27) leading to the heat exchanger (26) and a conduit (28) leading the space heating (5).

2. A tap water and central heating control unit according to claim 1, whereby the heat supply to the tap water heat exchanger (26) has priority of the heat supply to the space heating (5), characterized in that the one and the other three-way valve (20, 21) in rest position are open respectively to the by-pass conduit (23) and to the conduit (27) leading to the tap water heat exchanger (26), that a rest contact of the tap water thermostat (40) is connected to one contact of the central heating thermostat (44), the other contact of which is connected in series to an excitation means of the other three-way valve (21), which has an end contact which is connected in series to an excitation means of the one three-way valve (20).

3. A tap water and central heating control unit according to claim 2, characterized in that the one three-way valve (20) comprises an end contact which is connected in series to an excitation means of the circulation pump (24).

4. A tap water and central heating control unit according to claim 2, characterized in that the end contact of the other three-way valve (21) is also connected to a unit meter for consumption measurements.

**Revendications**

1. Dispositif (4) de commande d'eau du robinet et de chauffage central destiné à l'emploi dans une alimentation en eau chaude d'immeuble ou de quartier, dans lequel l'eau chaude est fournie à partir d'une source de chaleur centrale (1) et par l'intermédiaire d'une conduite en boucle (12) à une pluralité de dispositifs (4) de commande d'eau du robinet et de chauffage central situés à distance, chaque dispositif de commande étant pourvu d'un échangeur de chaleur (26) comprenant une spirale d'eau du robinet, deux vannes à trois voies (20, 21) disposées dans un système de conduites à relier à un calorifère (5) et comprenant une conduite d'amenée (22) et und conduite de sortie (29) pour l'eau chaude de la conduite en boucle (12), une pompe de circulation (24), un thermostat d'eau du robinet (40) et un thermostat de chauffage central (44) ainsi qu'une circuiterie électrique et l'alimentation en courant correspondante, caractérisé en ce que l'une des vannes à trois voies (20) est insérée directement dans la conduite d'amenée (22) d'eau chaude et divise cette conduite d'amenée en une conduite de dérivation (23) menant à la conduite de sortie (29) et en une autre conduite (25) comportant la pompe de circulation (24) et menant à l'autre vanne à trois voies (21), laquelle autre vanne divise ladite autre conduite en une conduite (27) menant à l'échangeur de chaleur (26) et en une conduite (28) menant au calorifère (5).

2. Dispositif de commande d'eau du robinet et de chauffage central selon la revendication 1, dans lequel l'apport de chaleur à l'échangeur de chaleur pour l'eau du robinet (26) a priorité sur l'apport de chaleur au calorifère (5), caractérisé en ce que l'une et l'autre vanne à trois voies (20, 21) est ouverte en sa position de repos respectivement vers la conduite de dérivation (23) et vers la conduite (27) menant à l'échangeur de chaleur pour l'eau du robinet (26), et une borne de repos du thermostat d'eau du robinet (40) est reliée à l'une des bornes du thermostat de chauffage central (44) dont l'autre borne est branchée en série avec un moyen de commande de l'autre vanne à trois voies (21), laquelle est pourvue d'un interrupteur de fin de course qui est branché en série avec un moyen de commande de la première vanne à trois voies (20).

3. Dispositif de commande d'eau du robinet et de chauffage central selon la revendication 2, caractérisé en ce que la première vanne à trois voies (20) comporte un interrupteur de fin de course qui est branché en série avec un moyen de commande de la pompe de circulation (24).

4. Dispositif de commande d'eau du robinet et de chauffage central selon la revendication 2, caractérisé en ce que l'interrupteur de fin de course de l'autre vanne à trois voies (21) est connecté aussi à un instrument de mesure étalonné en unités de mesure de consommation.

**Patentansprüche**

1. Vorrichtung (4) zum Steuern von Leitungswasser und Zentralheizung zur Verwendung in einer Haus- oder Stadtviertel-Warmwasserversorgung, wobei das Warmwasser von einer zentralen Wärmequelle (1) über eine Ringleitung (12) einer Mehrzahl von entfernten Leitungswasser- und Zentralheizungs-Steuervorrichtungen (4) geliefert wird, jede Steuervorrichtung mit einem eine Leitungswasserspirale aufweisenden Wärmeaustauscher (26), zwei Dreiweg-Ventilen (20, 21) in einem zur Verbindung mit der Raumheizung (5) bestimmten, eine Zuleitung (22) und eine Ableitung (29) für das Warmwasser der Ringleitung (12) aufweisenden Leitungssystem, einer Zirkulationspumpe (24), einem Leitungswasser-Thermostat (40) und einem Zentralheizungs-Thermostat (44) sowie elektrischen Leitungen und zugehöriger Stromversorgung versehen ist, dadurch gekennzeichnet, dass das eine Dreiweg-Ventil (20) unmittelbar in der Zuleitung (22) des Warmwassers angeordnet ist, diese Zuleitung in eine zur Ableitung (29) führende Umgehungsleitung (23) und eine andere, die Zirkulationspumpe (24) enthaltende und zum anderen Dreiweg-Ventil (21) führende Leitung (25) unterteilt, und dieses andere Dreiweg-Ventil die genannte andere Leitung in eine zum Wärmeaustauscher (26) führende Leitung (27) und eine zur Raumheizung (5) führende Leitung (28) unterteilt.

2. Leitungswasser- und Zentralheizungs-Steuervorrichtung nach Anspruch 1, in welcher die Wärmeversorgung des Leitungswasser-Wärmeaustauschers (26) über die Wärmeversorgung der Raumheizung (5) Vorrang hat, dadurch gekennzeichnet, dass das eine und das andere Dreiweg-Ventil (20, 21) in ihrer Ruhestellung zur Umgehungsleitung (23) hin beziehungsweise zu der zum Leitungswasser-Wärmeaustauscher (26) führenden Leitung (27) hin offen sind, eine Ruheklemme des Leitungswasser-Thermostats (40) mit der einen Klemme des Zentralheizungs-Thermostats (44) verbunden ist, die andere Klemme des Zentralheizungs-Thermostats mit einem Steuermittel des anderen Dreiweg-Ventils (21) in Reihe geschaltet ist, und dieses andere Dreiweg-Ventil einen Endschalter aufweist, der mit einem Steuermittal des einen Dreiweg-Ventils (20) in Reihe geschaltet ist.

3. Leitungswasser- und Zentralheizungs-Steuervorrichtung nach Anspruch 2, dadurch gekennzeichnet, dass das eine Dreiweg-Ventil

(20) einen mit einem Steuermittel der Zirkulationspumpe (24) in Reihe geschalteten Endschalter aufweist.

4. Leitungswasser- und Zentralheizungs-Steuervorrichtung nach Anspruch 2, dadurch gekennzeichnet, dass der Endschalter des anderen Dreiweg-Ventils (21) auch mit einem Verbrauchseinheiten-Messgerät verbunden ist.

Fig-1

# Fig-2

Fig-3